(19) **Europäisches Patentamt / European Patent Office / Office européen des brevets**

(11) **EP 3 232 625 B1**

(12) **EUROPEAN PATENT SPECIFICATION**

(45) Date of publication and mention
of the grant of the patent:
**11.03.2020 Bulletin 2020/11**

(21) Application number: **15871465.9**

(22) Date of filing: **30.01.2015**

(51) Int Cl.:
**H04L 25/02** *(2006.01)*      **H04L 25/03** *(2006.01)*

(86) International application number:
**PCT/CN2015/071975**

(87) International publication number:
**WO 2016/101386 (30.06.2016 Gazette 2016/26)**

(54) **COMMUNICATION METHOD, APPARATUS AND SYSTEM**

KOMMUNIKATIONSVERFAHREN, VORRICHTUNG UND SYSTEM

PROCÉDÉ, APPAREIL, ET SYSTÈME DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2014 CN 201410841019**

(43) Date of publication of application:
**18.10.2017 Bulletin 2017/42**

(73) Proprietor: **Huawei Technologies Co., Ltd.
Longgang District
Shenzhen, Guangdong 518129 (CN)**

(72) Inventors:
• **XU, Mingtao
  Shenzhen
  Guangdong 518129 (CN)**
• **XU, Heng
  Shenzhen
  Guangdong 518129 (CN)**
• **QUE, Chengsheng
  Shenzhen
  Guangdong 518129 (CN)**
• **HUANG, Hui
  Shenzhen
  Guangdong 518129 (CN)**
• **GU, Chunying
  Shenzhen
  Guangdong 518129 (CN)**
• **WANG, Xinyu
  Shenzhen
  Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**CN-A- 102 045 094      CN-A- 102 118 762
CN-A- 103 067 312      CN-A- 103 595 665
US-A1- 2004 248 519    US-A1- 2009 310 505**

• **QIU DU ET AL: "ICI mitigation by Doppler
  frequency shift estimation and
  pre-compensation in LTE-R systems",
  COMMUNICATIONS IN CHINA (ICCC), 2012 1ST
  IEEE INTERNATIONAL CONFERENCE ON, IEEE,
  15 August 2012 (2012-08-15), pages 469-474,
  XP032268050, DOI:
  10.1109/ICCCHINA.2012.6356928 ISBN:
  978-1-4673-2814-2**

EP 3 232 625 B1

## Description

### TECHNICAL FIELD

The present invention relates to the communications field, and in particular, to a communications method, device, and system for adjusting a frequency deviation in a system that implements networking by using a combined cell.

### BACKGROUND

During communication between a terminal and a base station, if the terminal is moving fast, the communication between the terminal and the base station is affected.

On one hand, a downlink signal transmitted by a base station is affected by a Doppler effect, thereby causing that a certain Doppler frequency deviation (full name in English may be: frequency deviation) exists in the signal when the signal arrives at a terminal. A degree of the frequency deviation may be referred to as a Doppler frequency offset (full name in English is frequency offset). This Doppler frequency deviation affects downlink signal demodulation performance of the system.

In the prior art, the terminal may estimate a frequency offset of a downlink signal of the base station, and actively adjust a crystal oscillator of the terminal, so that a frequency of the terminal is consistent with a frequency of the downlink signal that has the frequency deviation, thereby preventing deteriorated downlink signal demodulation performance of the terminal.

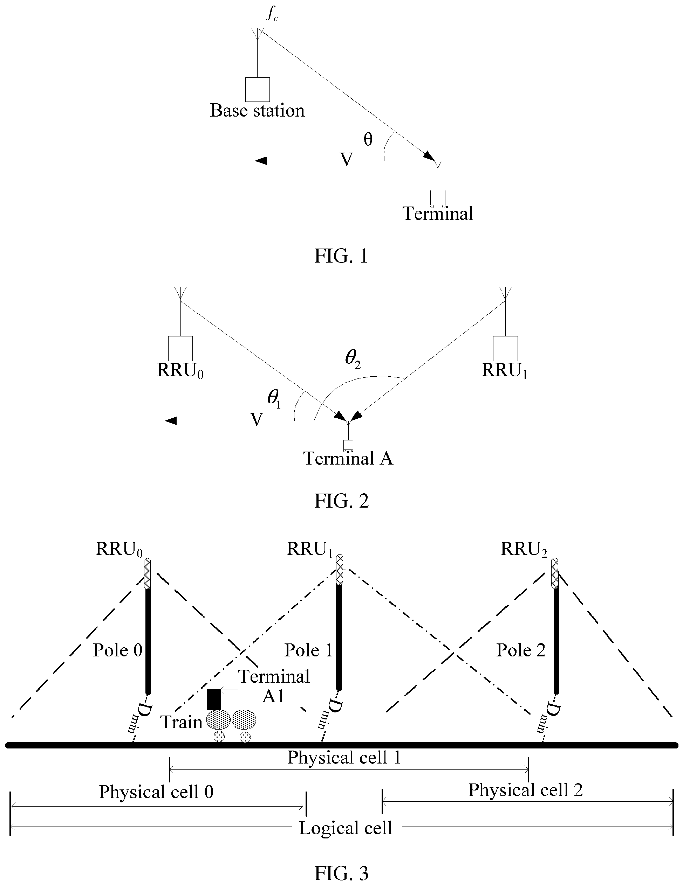

As shown in FIG. 1, in a scenario in which a terminal estimates a frequency offset of a downlink signal of a base station, $f_{d-max}$ is a maximum frequency offset of the downlink signal, $f_c$ is a frequency on which the base station transmits the downlink signal, $\theta$ is an included angle between a moving direction of the terminal and a direction of the base station relative to the terminal, V is a moving speed of the terminal, a solid line arrow indicates a direction in which the base station transmits the signal to the terminal, and a dashed line arrow indicates a moving direction of the terminal. The terminal may determine the frequency offset of the downlink signal according to a phase difference between channel estimated values of two pilot symbols of the downlink signal and a time interval between the two pilot symbols, and adjust the crystal oscillator of the terminal according to the frequency offset.

On the other hand, a fast moving terminal probably performs a cell handover frequently, thereby deteriorating system performance. Therefore, a communications system in which the fast moving terminal exists, for example, a communications system along a high-speed railway, may use a cell-combined networking mode, to decrease a quantity of handovers of the terminal. It is assumed that, in a communications system that includes a base station and a terminal, the base station includes one baseband unit (Baseband Unit, BBU) and multiple remote radio units (Remote Radio Unit, RRU). Each RRU corresponds to one physical cell, a logical cell that includes multiple physical cells corresponds to one BBU, and all physical cells inside one logical cell perform downlink joint transmission and uplink joint reception, thereby achieving the cell-combined networking mode.

In the prior art, a moving terminal $A_1$ may be located in an overlapping coverage area of two RRUs. As shown in FIG. 2, in a scenario in which the terminal $A_1$ estimates a frequency offset of a downlink signal of a base station, included angles between downlink signals of an $RRU_0$ and an $RRU_1$ and a moving direction of the terminal $A_1$ are respectively $\theta_1$ and $\theta_2$, and a difference between actual frequency offsets of the downlink signals separately sent by the $RRU_0$ and the $RRU_1$ is very large when the downlink signals arrive at the terminal $A_1$. The $RRU_0$ and the $RRU_1$ uses a downlink joint transmission manner, that is, content of the downlink signals is the same, and therefore a signal received by the terminal $A_1$ can only be a mixed signal of the downlink signals from the $RRU_0$ and the $RRU_1$. If the terminal $A_1$ estimates the frequency offset of the downlink signal by using the prior art in the scenario in FIG. 1, differences between the estimated frequency offset and the two actual frequency offsets are both definitely very large, thereby deteriorating downlink signal demodulation performance of the terminal.

It can be seen that, in the prior art, in a communications system using a cell-combined networking mode, downlink signal demodulation performance of a moving terminal may be low.

US2004/248519A involves the frequency adjustment when the terminal moves between different base stations in a handover case.

XP032268050, QIU DU ET AL, "ICI mitigation by Doppler frequency shift estimation and pre-compensation in LTE-R systems", pages 469-474, IEEE, ISBN: 978-1-4673-2814-2) and CN102045094A disclose two RRUs send out data to a terminal with Doppler frequency shift compensation in cell-combined networking mode.

### SUMMARY

Embodiments of the present invention provide a communications method, device, and system, which can resolve a problem that performance of a moving terminal in downlink signal demodulation may be low in an existing communications system using a cell-combined networking mode. The subject matter of the invention is defined by the appended claims. Further aspects are described in the following for supporting the understanding of the invention.

This problem is solved by the subject matter of the independent claims. Further implementation forms are provided in the dependent claims.

A first aspect of the present invention provides a communications device, including: a baseband unit BBU and two remote radio units: an $RRU_0$ and an $RRU_1$, where the BBU is configured to control a first logical cell, and the first logical cell includes a physical cell covered by the $RRU_0$ and a physical cell covered by the $RRU_1$; the physical cell covered by the $RRU_0$ and the physical cell covered by the $RRU_1$ overlap in a first area; and the $RRU_0$ and the $RRU_1$ are configured to separately send a first downlink signal on a frequency $f_0$, and then separately send a second downlink signal on a first frequency and a second frequency, where the first frequency is a difference between $f_0$ and a first offset correction amount $f_{d\_d1\_0}$, the second frequency is a sum of $f_0$ and a second offset correction amount $f_{d\_dl\_1}$, where at least one of $f_{d\_dl\_0}$ and $f_{d\_dl\_1}$ is not 0.

Another aspect of the present invention provides a communications system, including: the foregoing communications device.

A second aspect of the present invention provides a communications method, including: separately sending, by a base station, a first downlink signal on a frequency $f_0$, and then separately sending a second downlink signal on a first frequency and a second frequency, where the first frequency is a difference between $f_0$ and a first offset correction amount $f_{d\_dl\_0}$, the second frequency is a sum of $f_0$ and a second offset correction amount $f_{d\_dl\_1}$, where at least one of $f_{d\_dl\_0}$ and $f_{d\_dl\_1}$ is not 0; and the base station includes a baseband unit BBU and two remote radio units: an $RRU_0$ and an $RRU_1$, where the BBU is configured to control a first logical cell, and the first logical cell includes a physical cell covered by the $RRU_0$ and a physical cell covered by the $RRU_1$; and the physical cell covered by the $RRU_0$ and the physical cell covered by the $RRU_1$ overlap in a first area.

Optionally, in the foregoing communications device, system, and method, $f_{d\_dl\_0}$ and $f_{d\_dl\_1}$ separately meet a certain condition, so as to highly ensure terminal demodulation performance. The foregoing condition may include: $|f_{d\_dl\_0}| < |2*f_{d\_dl}|$; and $|f_{d\_dl\_1}| < |2*f_{d\_dl}|$, where the parameters $f_{d\_dl}$, $f_{d\_dl\_0}$, and $f_{d\_dl\_1}$ are all non-positive numbers, or, $f_{d\_dl}$, $f_{d\_dl\_0}$, and $f_{d\_dl\_1}$ are all non-negative numbers. For example, $f_{d\_dl\_0}$ and $f_{d\_dl\_1}$ are both equal to $f_{d\_dl}$, and are not 0.

A third aspect of the present invention provides a communications device, including: a baseband unit BBU and two remote radio units: an $RRU_0$ and an $RRU_1$, where the BBU is configured to control a first logical cell, and the first logical cell includes a physical cell covered by the $RRU_0$ and a physical cell covered by the $RRU_1$; the physical cell covered by the $RRU_0$ and the physical cell covered by the $RRU_1$ overlap in a first area; the RRU0 and the RRU1 are configured to separately receive uplink signals sent by n terminals that move from the $RRU_1$ to the $RRU_0$, where the n terminals are located in the first area, the $i^{th}$ terminal is indicated by a terminal $A_i$, and i is any value from 1 to n; the BBU is configured to determine a parameter $f_{d\_dl}$; and the $RRU_0$ and the $RRU_1$ are further configured to separately send a downlink signal on a frequency that is adjusted according to $f_{d\_dl}$, where $f_d(i)$ indicates a Doppler frequency offset estimated value of the terminal $A_i$ that is determined according to the uplink signals:

$$f_{d\_dl} = \sum_{i=1}^{n} a(i) * f_d(i)\,;\ \text{and}\ \sum_{i=1}^{n} a(i){=}1,\ \text{and}\ 0{\le}a(i){\le}1.$$

In a first implementation manner of the third aspect of the present invention, the BBU may be specifically configured to determine $f_d(i)$ by using the following formula: $f_d(i) = R * (\Delta f_0(i) - \Delta f_1(i)) / 2$, where $\Delta f_0(i)$ indicates a frequency offset of an uplink signal received by the $RRU_0$ from the terminal $A_i$, and $\Delta f_1(i)$ indicates a frequency offset of an uplink signal received by the $RRU_1$ from the terminal $A_i$; and R is a variable greater than 0. Optionally, when the BBU works in a TDD system, a value of R is 1; or, when the BBU works in an FDD system, R is a ratio of a downlink carrier frequency to an uplink carrier frequency in the FDD system.

With reference to the third aspect of the present invention or the first implementation manner of the third aspect, in a second implementation manner of the third aspect of the present invention, the BBU may be further configured to determine RSRP of the uplink signals that are received by the $RRU_0$ and the $RRU_1$, and determine a(i) according to the following formulas:

$$RSRP\_i = RSRP_0(i) + RSRP_1(i);$$

$$RSRP\_sum = \sum RSRP\_i;$$

and

$$a(i) = RSRP\_i / RSRP\_sum$$

where $RSRP_0(i)$ indicates reference signal received power RSRP of the uplink signal received by the $RRU_0$ from the terminal $A_i$, and $RSRP_1(i)$ indicates RSRP of the uplink signal received by the $RRU_1$ from the terminal $A_i$.

With reference to the third aspect of the present invention or the foregoing implementation manners of the third aspect, in a third implementation manner of the third aspect of the present invention, distances from the first area to the $RRU_0$ and the $RRU_1$ are both d, where,

$$d = \frac{(100 - q) * D_{\min}}{\sqrt{200q - q^2}}$$

where q% indicates a tolerance for a difference between frequency offsets of different terminals, a value range of q is [0, 100], and a value range of $D_{\min}$ is $[L_0, L_1]$, where $L_0$ indicates a vertical distance between movement lines of the $RRU_0$ and the terminal $A_i$, and $L_1$ indicates a vertical distance between movement lines of the $RRU_1$ and the terminal $A_i$.

With reference to the third aspect of the present invention or the foregoing implementation manners of the third aspect, in a fourth implementation manner of the third aspect of the present invention, the BBU is further configured to: before determining $f_{d\_dl}$, determine that the n terminals are located in the first area.

With reference to the third aspect of the present invention and the foregoing implementation manners of the third aspect, in a fifth implementation manner of the third aspect of the present invention, the BBU is specifically configured to: when a first condition and a second condition are met, determine that the n terminals are located in the first area, where the first condition includes that: a Doppler frequency offset estimated value of every terminal in the n terminals is a positive number or a negative number, and the second condition includes that: an absolute value of a difference between Doppler frequency offset estimated values of every two terminals in the n terminals is less than or equal to $|q\%*f_{d-max}|$, where $f_{d-max}$ is a maximum frequency offset of a downlink signal from the $RRU_0$ or the $RRU_1$.

With reference to the fourth or fifth implementation manners of the third aspect of the present invention, in a sixth implementation manner of the third aspect of the present invention, the BBU is further configured to: if the n terminals are located in the first area, determine $f_{d\_dl}$ according to a cycle T. Optionally, the BBU is further configured to determine T, where a value range of T is $[m * t, D_s / v]$, where t indicates a cycle in which the terminal $A_i$ reports a measurement amount, and the measurement amount is a measurement result of the terminal $A_i$ for RSRP of the downlink signal from the $RRU_0$; m is greater than 0; $D_s$ indicates a distance between the $RRU_0$ and the $RRU_1$; and v indicates a moving speed of the terminal $A_i$.

With reference to the third aspect of the present invention or the foregoing implementation manners of the third aspect, in a seventh implementation manner of the third aspect of the present invention, when central frequencies of the $RRU_0$ and the $RRU_1$ are $f_0$, the $RRU_0$ and the $RRU_1$ being configured to separately send a downlink signal on a frequency that is adjusted according to $f_{d\_dl}$ includes: the $RRU_0$ is configured to send a downlink signal on a first frequency, where the first frequency is a difference between fo and a first offset correction amount $f_{d\_dl\_0}$; and the $RRU_1$ is configured to send a downlink signal by using a second frequency, where the second frequency is a sum of $f_0$ and a second offset correction amount $f_{d\_dl\_1}$, where at least one of $f_{d\_dl\_0}$ and $f_{d\_dl\_1}$ is not 0.

Optionally, $f_{d\_dl\_0}$ and $f_{d\_dl\_1}$ respectively meet the following conditions: $|f_{d\_dl\_0}| < |2*f_{d\_dl}|$; and $|f_{d\_dl\_1}| < |2*f_{d\_dl}|$, where the parameters $f_{d\_dl}$, $f_{d\_dl\_0}$, and $f_{d\_dl\_1}$ are all non-positive numbers, or, $f_{d\_dl}$, $f_{d\_dl\_0}$, and $f_{d\_dl\_1}$ are all non-negative numbers. For example, $f_{d\_dl\_0}$ and $f_{d\_dl\_1}$ are both equal to $f_{d\_dl}$, and are not 0.

The communications method, device, and system that are provided by the foregoing solutions can be applied to a communications system using a cell-combined networking mode, which can prevent deteriorated downlink signal demodulation performance of a moving terminal.

**BRIEF DESCRIPTION OF DRAWINGS**

FIG. 1 is a schematic diagram of a scenario in which a terminal estimates a frequency offset of a downlink signal from a base station;
FIG. 2 is a schematic diagram of a scenario in which a terminal $A_1$ estimates frequency offsets of downlink signals from two RRUs;

FIG. 3 is a schematic diagram of a communications system using a cell-combined networking mode along a high-speed railway;

FIG. 4 is a schematic diagram of another communications system using a cell-combined networking mode along a high-speed railway;

FIG. 5 is a schematic diagram of another communications system using a cell-combined networking mode along a high-speed railway;

FIG. 6 is a schematic structural diagram of a communications device according to an embodiment of the present invention;

FIG. 7 is a schematic flowchart of a communications method according to an embodiment of the present invention; and

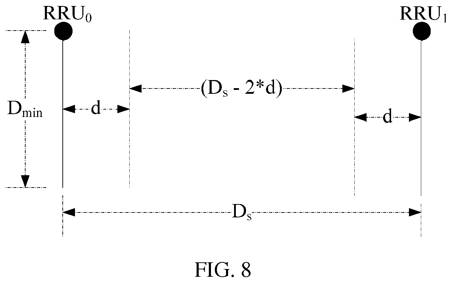

FIG. 8 is a schematic planar diagram of relative positions of a terminal, and an $RRU_0$ and an $RRU_1$ according to an embodiment of the present invention.

## DESCRIPTION OF EMBODIMENTS

The following describes the technical solutions in the embodiments of the present invention in detail with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention apply to multiple types of communications systems, for example, a Long Term Evolution (full name in English may be: Long Term Evolution, and LTE for short) system, and another communications system that has a downlink common pilot. In addition, when being applied to some scenarios, the embodiments of the present invention can obviously ensure terminal demodulation performance and communications system performance. These scenarios include but are not limited to: a scenario in which a terminal moves (particularly moves fast) in a communications system using a cell-combined networking mode. For example, scenarios shown in FIG. 3, FIG. 4, and FIG. 5.

As shown in FIG. 3, in a scenario in which a moving terminal exists, a pole 0 to a pole n are n poles along a high-speed railway, every two poles are spaced from each other by a certain distance, a line formed between every two poles is parallel to a line (track) on which a train is located, and a distance between the parallel lines is indicated by $D_{min}$. One RRU is disposed on every pole. Each RRU corresponds to one physical cell, a logical cell that includes multiple physical cells corresponds to one BBU, and all physical cells inside one logical cell perform downlink joint transmission and uplink joint reception, thereby achieving the cell-combined networking mode. It is assumed that, a number of a pole is the same as a number of an RRU on the pole, that is, an $RRU_n$ is disposed on the pole n, where a coverage area of the $RRU_n$ is a physical cell n. Then, it may be considered that the physical cell n is formed by a first-portion coverage area and a second-portion coverage area that are symmetrical with the pole n as the center. The first-portion coverage area of the physical cell n overlaps a partial coverage area of a physical cell, and the second-portion coverage area of the physical cell n overlaps a partial coverage area of another physical cell. For example, from a direction along the high-speed railway, a portion of a physical cell 1 at the left side of the pole 1 overlaps a portion of a physical cell 0 at the right side of the pole 0, and a portion of the physical cell 1 at the right side of the pole 1 overlaps a portion of a physical cell 2 at the left side of the pole 2. The train runs from right to left into an overlapping area of the physical cell 0 and the physical cell 1. A movement direction of a terminal $A_1$ may be described as: the terminal $A_1$ goes away from an $RRU_1$ and approaches an $RRU_0$, or, the terminal $A_1$ moves from the $RRU_1$ to the $RRU_0$. The terminal $A_1$ can receive downlink signals from both the $RRU_0$ and the $RRU_1$.

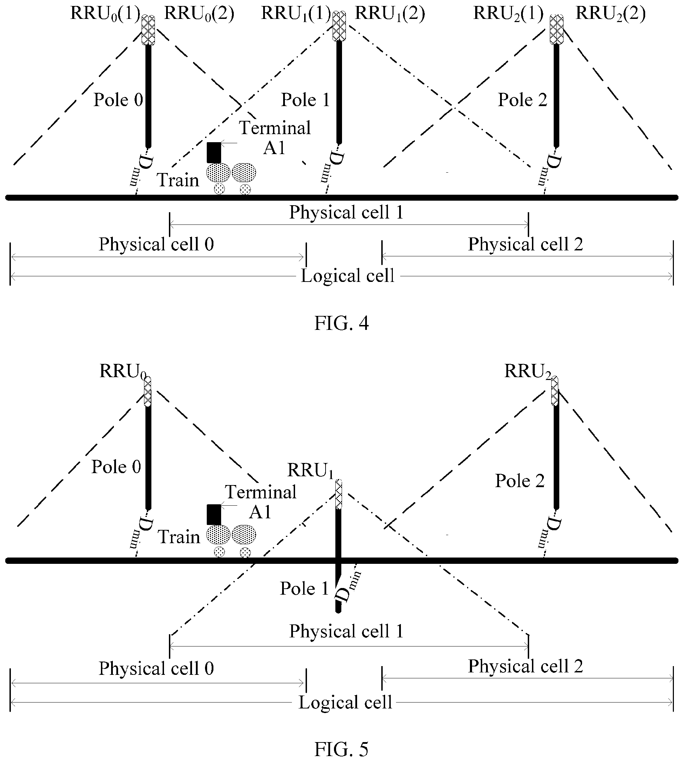

By comparison, differences between FIG. 4 and FIG. 3 lie in that: quantities of RRUs on every pole are different, that is, two RRUs are disposed on every pole in FIG. 4, while one RRU is disposed on every pole in FIG. 3; areas of physical cells covered by RRUs are different, for example, in FIG. 4, an $RRU_0(1)$ and an $RRU_0(2)$ separately cover a half of the physical cell 0 covered by the $RRU_0$ shown in FIG. 3.

By comparison, differences between FIG. 5 and FIG. 3 lie in that: poles in FIG. 5 are deployed in a staggered manner on two sides of the track line, that is, two adjacent RRUs are on two sides of a movement line of the terminal $A_1$; while poles in FIG. 3 are deployed on one side of the track line, that is, two adjacent RRUs are on a same side of the movement line of the terminal $A_1$. In FIG. 5, two RRUs may be disposed on every pole, and every RRU covers a half of the physical cell 0 covered by the $RRU_0$ shown in FIG. 3.

It may be understood that, in the foregoing scenarios shown in FIG. 3, FIG. 4, and FIG. 5, multiple terminals may exist in the train.

In the embodiments of the present invention, it is assumed that the terminal $A_1$ in the train is in an overlapping area of the physical cell 0 corresponding to the $RRU_0$ and the physical cell 1 corresponding to the $RRU_1$. In addition, it is further assumed that other terminals $A_2$ to $A_n$, also exist in the train, that is: there are a total of n terminals. If different terminals are indicated by different values of i, a value range of i is from 1 to n, where the $i^{th}$ terminal may be indicated

by $A_i$. That is, the $RRU_0$ and the $RRU_1$ can receive uplink signals sent by the n terminals, for example, a demodulation reference signal (demodulation reference signal, DMRS), and therefore the BBU can execute the embodiments of the present invention according to all or some of the foregoing uplink signals.

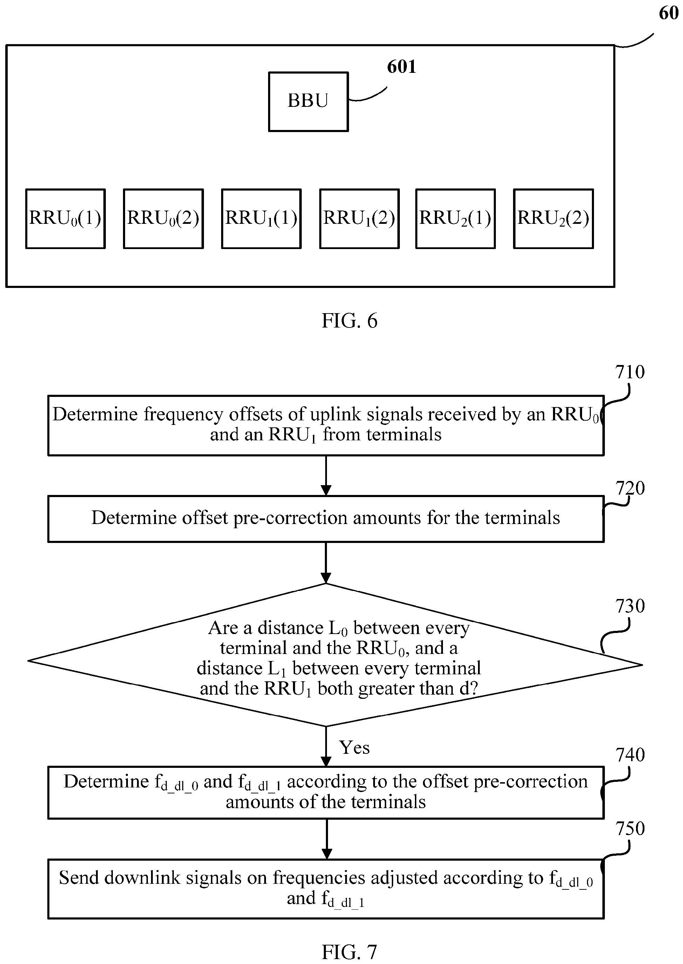

As shown in FIG. 6, an embodiment of the present invention provides a communications device 60, where the communications device 60 may be a base station. The communications device 60 includes a BBU 601 and two RRUs: an $RRU_0(2)$ and an $RRU_1(1)$, where the BBU 601 is configured to control a first logical cell, and the first logical cell includes a physical cell covered by the $RRU_0(2)$ and a physical cell covered by the $RRU_1(1)$; and the physical cell covered by the $RRU_0(2)$ and the physical cell covered by the $RRU_1(1)$ partially overlap in a first area.

Optionally, in the communications device 60, the $RRU_0(2)$ and the $RRU_1(1)$ may be both configured to send downlink signals on a frequency $f_0$, and if the frequency fo changes, the $RRU_0(2)$ and the $RRU_1(1)$ may be further configured to send downlink signals over a changed frequency.

For example, the $RRU_0(2)$ and the $RRU_1(1)$ are configured to separately send a first downlink signal on a frequency $f_0$, and then separately send a second downlink signal on a first frequency and a second frequency, where the first frequency is a difference between $f_0$ and a first offset correction amount $f_{d\_dl\_0}$, and the second frequency is a sum of fo and a second offset correction amount $f_{d\_dl\_1}$. $f_0$ is central frequencies of the $RRU_0(2)$ and the $RRU_1(1)$, and at least one of $f_{d\_dl\_0}$ and $f_{d\_dl\_1}$ is not 0.

Optionally, $f_{d\_dl\_0}$ and $f_{d\_dl\_1}$ meet the following conditions (1) to (3):

(1) a relationship between $f_{d\_dl\_0}$ and $f_{d\_dl}$ is $|f_{d\_dl\_0}| < 2*|f_{d\_dl}|$;

(2) a relationship between $f_{d\_dl\_1}$ and $f_{d\_dl}$ is $|f_{d\_dl\_1}| < 2*|f_{d\_dl}|$; and

(3) the parameters $f_{d\_dl}$, $f_{d\_dl\_0}$, and $f_{d\_dl\_1}$ are all non-positive numbers or all non-negative numbers.

It should be noted that, the condition (3) may include multiple cases, as shown in Table 1. For example, a case that meet the foregoing conditions (1) to (3) is: $f_{d\_dl\_0} = f_{d\_dl\_1} = f_{d\_dl} \neq 0$.

**Table 1**

| $f_{d\_dl}$ | $f_{d\_dl\_0}$ | $f_{d\_dl\_1}$ |
|---|---|---|
| Positive number | Positive number | Positive number |
| Positive number | 0 | Positive number |
| Positive number | Positive number | 0 |
| Negative number | Negative number | Negative number |
| Negative number | 0 | Negative number |
| Negative number | Negative number | 0 |

For another example, the $RRU_0(2)$ and the $RRU_1(1)$ are configured to separately send a first downlink signal on a frequency fo, and then separately send a second downlink signal on a first frequency and a second frequency, where the first frequency is a sum of fo and a first offset correction amount $f_{d\_dl\_0}$, and the second frequency is a sum of fo and a second offset correction amount $f_{d\_dl\_1}$; and fo is central frequencies of the $RRU_0(2)$ and the $RRU_1(1)$, and at least one of $f_{d\_dl\_0}$ and $f_{d\_dl\_1}$ is not 0.

Optionally, $f_{d\_dl\_0}$ and $f_{d\_dl\_1}$ meet the following conditions (4) to (6):

(4) a relationship between $f_{d\_dl\_0}$ and $f_{d\_dl}$ is $|f_{d\_dl\_0}| < 2*|f_{d\_dl}|$;

(5) a relationship between $f_{d\_dl\_1}$ and $f_{d\_dl}$ is $|f_{d\_dl\_1}| < 2*|f_{d\_dl}|$; and

(6) parameters $f_{d\_dl}$ and $f_{d\_dl\_1}$ are both non-positive numbers, and $f_{d\_dl\_0}$ is a non-negative number; or, $f_{d\_dl}$ and $f_{d\_dl\_1}$ are both non-negative numbers, and $f_{d\_dl\_0}$ is a non-positive number.

It should be noted that, the condition (6) may include multiple cases, as shown in Table 2. For example, a case that meet the foregoing conditions (4) to (6) is: $f_{d\_dl\_0} = -f_{d\_dl} \neq 0$, and $f_{d\_dl\_1} = f_{d\_dl}$.

**Table 2**

| $f_{d\_dl}$ | $f_{d\_dl\_0}$ | $f_{d\_dl\_1}$ |
|---|---|---|
| Positive number | Negative number | Positive number |
| Positive number | 0 | Positive number |
| Positive number | Negative number | 0 |
| Negative number | Positive number | Negative number |
| Negative number | 0 | Negative number |
| Negative number | Positive number | 0 |

$f_{d\_dl}$ in this embodiment of the present invention is generally not 0, and therefore descriptions are made by using a case in which $f_{d\_dl}$ is a positive number or a negative number as an example in the foregoing Table 1 and Table 2.

It should be noted that, the foregoing conditions and examples further have multiple other variants, which may all apply to this embodiment of the present invention. Details are not provided again herein.

In the communications device 60 provided in this embodiment of the present invention, it is assumed that, the $RRU_0(2)$ and the $RRU_1(1)$ send downlink signals after the frequency is adjusted to a terminal that gradually approaches the $RRU_0(2)$ and goes away from the $RRU_1(1)$ in the overlapping coverage area of the $RRU_0(2)$ and the $RRU_1(1)$. Frequency offsets of the foregoing downlink signals when arriving at the terminal less affect terminal demodulation performance, that is, downlink signal demodulation performance of the terminal is improved. Particularly, in the foregoing two examples in which the conditions (1) to (3) and the conditions (4) to (6) are met, the frequency offsets of the foregoing downlink signals when arriving at the terminal may be the same, and in this case, obviously ensuring the downlink signal demodulation performance of the terminal.

It should be noted that, the communications device 60 is not limited to include only two RRUs. As shown in FIG. 6, the communications device 60 may further include an $RRU_0(1)$, an $RRU_1(2)$, an $RRU_2(1)$, an $RRU_2(2)$, and the like, and physical cells covered by these RRUs may be shown in FIG. 4.

The scenario shown in FIG. 4 is used as an example. The following describes the communications device 60 in detail.

Optionally, if the frequency $f_0$ changes, the $RRU_0(2)$ and the $RRU_1(1)$ may first determine, before sending the downlink signals on the changed frequency, the parameter $f_{d\_dl}$ based on which the frequency fo changes. For example, the communications device 60 determines $f_{d\_dl}$ by using uplink signals sent by n terminals, where the n terminals are located in the first area, and the moving direction is from the $RRU_1(1)$ to the $RRU_0(2)$, the $i^{th}$ terminal is indicated by a terminal $A_i$, and i is any value from 1 to n; and then the $RRU_0(2)$ and the $RRU_1(1)$ separately receive uplink signals sent by the n terminals, and the BBU 601 determines a process variable $f_d(i)$ for the terminal $A_i$ according to the uplink signals, and determines $f_{d\_dl}$ according to the following formula (6.1):

$$f_{d\_dl} = \sum_{i=1}^{n} a(i) * f_d(i) \qquad \text{formula (6.1);}$$

and

$$\sum_{i=1}^{n} a(i) = 1, \text{ and } 0 \leq a(i) \leq 1.$$

It may be understood that in this embodiment of the present invention, when the BBU 601 determines $f_{d\_dl}$ by using the formula (6.1), available $f_d(i)$ and a(i) are required, where $f_d(i)$ may be referred to as a Doppler frequency offset estimated value or an offset pre-correction amount of the terminal $A_i$, and a(i) may be referred to as a weight value. By using an example, the following describes how to first determine $f_d(i)$ and a(i) before the BBU 601 determines $f_{d\_dl}$.

The following formula (6.2) is an example in which the BBU 601 determines $f_d(i)$:

$$f_d(i) = R * (\Delta f_0(i) - \Delta f_1(i)) / 2 \qquad \text{formula (6.2),}$$

where $\Delta f_0(i)$ indicates a frequency offset of an uplink signal received by the $RRU_0(2)$ from the terminal $A_i$, and $\Delta f_1(i)$

indicates a frequency offset of an uplink signal received by the $RRU_1(1)$ from the terminal $A_i$.

In the foregoing formula (6.2), the variable R is greater than 0. Optionally, the BBU 601 determines a value of R according to a standard of a communications system in which the BBU 601 works (that is, a communications system in which the communications device 60 is located). For example, if the BBU 601 works in a TDD system, the BBU 601 may determine that R is 1. For another example, if the BBU 601 works in an FDD system, the BBU 601 may determine that R is a ratio of a downlink carrier frequency to an uplink carrier frequency in the FDD system.

It should be noted that, if a difference between $f_d(i)$ determined according to the foregoing formula (6.2) and $f_{d-max}$ is tolerable, where $f_{d-max}$ is a maximum frequency offset of a downlink signal sent by the $RRU_0(2)$ or the $RRU_1(1)$ to the terminal $A_i$, the process variable $f_d(i)$ for the terminal $A_i$ may be considered as an estimated value of a Doppler frequency offset of the terminal $A_i$, which is briefly referred to as an Doppler frequency offset estimated value.

The following formula (6.3) is an example in which the BBU 601 determines a(i):

$$a(i) = RSRP\_i \, / \, RSRP\_sum \; \text{formula (6.3)};$$

$$RSRP\_i = RSRP_0(i) + RSRP_1(i);$$

and

$$RSRP\_sum = \sum RSRP\_i$$

where $RSRP_0(i)$ indicates reference signal received power (reference signal received power, RSRP) of the uplink signal received by the $RRU_0(2)$ from the terminal $A_i$, and $RSRP_1(i)$ indicates RSRP of the uplink signal received by the $RRU_1(1)$ from the terminal $A_i$. The unit of the foregoing RSRP may be mW.

It should be noted that, there are multiple methods for the BBU 601 to determine $f_d(i)$ and a(i), which are not limited to the foregoing formulas.

For example, by using all possible frequency adjustment values Yi as a parameter, the BBU 601 simulates separately adjusting frequencies on which the $RRU_0(2)$ and the $RRU_1(1)$ send downlink signals. If downlink signals separately sent by the $RRU_0(2)$ and the $RRU_1(1)$ on frequencies that are adjusted by using $Y_i$ have a same frequency offset X (for example, frequency offsets X are both 0) when arriving at the $i^{th}$ terminal ($A_i$), Yi may be referred to as the offset pre-correction amount for the terminal $A_i$, that is, it is suitable to use the foregoing formula (6.1) to adjust $f_d(i)$ of the downlink signals. The offset pre-correction amount may be interpreted as follows: before frequencies are adjusted by using $Y_i$, a possible adjustment process is simulated, so as to select an appropriate process variable. Optionally, the simulation herein may be implemented by using an action such as simulation in a communications process and/or arithmetic calculation.

Optionally, the communications device 60 determines $f_{d\_dl\_0}$ and $f_{d\_dl\_1}$ by using $f_{d\_dl}$ as a parameter, and then adjusts the frequency fo according to $f_{d\_dl\_0}$ and $f_{d\_dl\_1}$. This process may be referred to as a frequency adjustment by using $f_{d\_dl}$ as a parameter.

It may be understood that, the frequency adjustment performed by the communications device 60 by using $f_{d\_dl}$ as the parameter is a real adjustment that acts on downlink signals sent to multiple terminals, and the frequency adjustment performed by the communications device 60 by using $f_d(i)$ as the parameter is a virtual adjustment that acts on downlink signals sent to a single terminal. In this embodiment of the present invention, the frequency adjustment includes a correction of an amount corresponding to a frequency deviation on the basis of an original frequency, and therefore an actual adjustment value in this embodiment may also be referred to as an offset correction amount, and a virtual adjustment value (that is, the process variable $f_d(i)$) may also be referred to as an offset pre-correction amount.

It should be noted that, distances from the first area to the $RRU_0(2)$ and the $RRU_1(1)$ are both d. That is, when a terminal moves in an area in which distances from the terminal to the $RRU_0(2)$ and the $RRU_1(1)$ are both d, this embodiment of the present invention can obviously ensure the downlink signal demodulation performance of the terminal. Specifically, frequency offsets of terminals in the first area may be considered to be the same, and therefore frequency offsets of downlink signals sent by the $RRU_0(2)$ and the $RRU_1(1)$ by using an adjusted frequency are improved when the downlink signals arrive at every terminal in the first area. That is, compared with a terminal outside the foregoing first area, a terminal in the foregoing first area more obviously benefits from a method for an RRU to send a downlink signal by using an adjusted frequency in this embodiment of the present invention. Therefore, for a terminal in the first area, when the BBU 601 executes the method provided in this embodiment of the present invention, efficiency is higher, and an achieved effect is better.

Therefore, optionally, the BBU 601 may further determine that the n terminals are located in the first area before determining $f_{d\_dl\_0}$ and $f_{d\_dl\_1}$ (even before determining $f_{d\_dl}$), so that the BBU 601 determines whether to enable the $RRU_0(2)$ and the $RRU_1(1)$ to send downlink signals on the adjusted frequency. If the n terminals are not located in the first area, the BBU 601 may determine that the $RRU_0(2)$ and the $RRU_1(1)$ continue to send downlink signals on the frequency $f_0$. In this case, the BBU 601 does not need to determine $f_{d\_dl\_0}$ and $f_{d\_dl\_1}$ (even does not need to determine $f_{d\_dl}$).

This embodiment of the present invention does not limit a parameter based on which the BBU 601 determines that the n terminals are located in the first area. For example, by measuring the uplink signals sent by the n terminals, the BBU 601 determines a specific area that a terminal enters. For another example, the BBU 601 may be configured to: when a first condition and a second condition are met, determine that the n terminals are located in the first area. The first condition includes that: an offset pre-correction amount of every terminal in the n terminals is a positive number or a negative number. The second condition includes that: an absolute value of a difference between offset pre-correction amounts of every two terminals in the n terminals is less than or equal to $|q\%*f_{d-max}|$, where $f_{d-max}$ is a maximum frequency offset of a downlink signal of the $RRU_0(2)$ or the $RRU_1(1)$.

It should be noted that, the foregoing d may be indicated by using the following formula (6.4):

$$d = \frac{(100-q)*D_{\min}}{\sqrt{200q-q^2}} \quad \text{formula (6.4)},$$

where q% indicates a tolerance for a difference between frequency offsets of different terminals, and a value range of q is [0, 100]. It may be understood that, in a case in which the differences between frequency offsets of different terminals are less than or equal to q%, the frequency offsets are considered to be the same. That is, if the differences between frequency offsets of different terminals fall within the difference tolerance (q%), the differences may be ignored.

A value range of $D_{\min}$ is $[L_0, L_1]$, where $L_0$ indicates a vertical distance between movement lines of the $RRU_0(2)$ and the terminal $A_i$, and $L_1$ indicates a vertical distance between movement lines of the $RRU_1(1)$ and the terminal $A_i$. If a straight line formed between the $RRU_0(2)$ and the $RRU_1(1)$ may be considered to be parallel (or basically parallel) to a movement line of the terminal $A_i$, $D_{\min} = L_0 = L_1$.

It should be noted that, the foregoing q and $D_{\min}$ may both be preset values. For example, an empirical value is configured on the BBU 601. Alternatively, the foregoing q and $D_{\min}$ may be specific values determined by the BBU 601 according to another calculation process.

Optionally, the BBU 601 is further configured to determine $f_{d\_dl}$ according to a cycle T. For example, after determining that the foregoing n terminals are located in the first area, the BBU 601 determines $f_{d\_dl}$ according to the cycle T. A value range of T is $[m * t, D_s / v]$, where t indicates a cycle in which the terminal $A_i$ reports a measurement amount, and the measurement amount is a measurement result of the terminal $A_i$ for RSRP of the downlink signal from the $RRU_0(2)$ or the $RRU_1(1)$; m is greater than 0; $D_s$ indicates a distance between the $RRU_0(2)$ and the $RRU_1(1)$; and v indicates a moving speed of the terminal $A_i$. In this embodiment of the present invention, if the n terminals are located in the first area, the BBU 601 may determine $f_{d\_dl}$ according to the cycle T multiple times, thereby implementing multiple adjustments of the frequencies on which the $RRU_0(2)$ and the $RRU_1(1)$ send downlink signals. Specifically, in every cycle T, $f_{d\_dl}$ determined by the BBU 601 may be different. It is assumed that, in two adjacent cycles T1 and T2, $f_{d\_dl}$ determined by the BBU 601 is respectively $Z_1$ and $Z_2$. Then, in T1, the BBU 601 determines $f_{d\_dl\_0}$ and $f_{d\_dl\_1}$ according to $Z_1$, and enables the $RRU_0(2)$ and the $RRU_1(1)$ to adjust, on the basis of $f_0$, the frequencies on which downlink signals are sent; and then, in T2, the BBU601 determines new $f_{d\_dl\_0}$ and new $f_{d\_dl\_1}$ according to $Z_2$, and enables the $RRU_0(2)$ and the $RRU_1(1)$ to readjust, on the basis of $f_0$, the frequencies on which downlink signals are sent, thereby enhancing an effect of ensuring terminal demodulation performance.

It may be understood that, when determining $f_{d\_dl}$, the BBU 601 may use $f_d(i)$ as a parameter, and after determining $f_{d\_dl}$, may further determine $f_{d\_dl\_0}$ and $f_{d\_dl\_1}$ according to $f_{d\_dl}$; and therefore it may be considered that cycles in which the BBU 601 determines $f_d(i)$, $f_{d\_dl}$, $f_{d\_dl\_0}$, and $f_{d\_dl\_1}$ are the same.

If this embodiment of the present invention is not applied, frequency offsets of downlink signals sent by the $RRU_0(2)$ and the $RRU_1(1)$ on frequencies that are adjusted by using $f_d(i)$ are respectively $X_0$ and $X_1$ when the downlink signals arrive at the terminal $A_i$, and when this embodiment of the present invention is applied, frequency offsets of downlink signals sent by the $RRU_0(2)$ and the $RRU_1(1)$ on frequencies that are adjusted by using $f_d(i)$ are respectively $X_0'$ and $X_1'$, a difference between $X_0'$ and $X_1'$ is undoubtedly less than a difference between $X_0$ and $X_1$. That is, this embodiment of the present invention can reduce a negative effect brought by a frequency offset of a downlink signal to the terminal demodulation performance.

Particularly, in this embodiment of the present invention, if downlink signals sent by the $RRU_0(2)$ and the $RRU_1(1)$ on frequencies adjusted by using fd(i) have a same frequency offset X when arriving at the terminal $A_i$, and X is 0, when the $RRU_0(2)$ and the $RRU_1(1)$ send the downlink signals on the adjusted frequencies, it may be considered that a frequency deviation does not exist in the downlink signals received by the terminal Ai. The terminal $A_i$ can maintain good downlink signal demodulation performance without needing to adjust a crystal oscillator of the terminal $A_i$. If downlink signals sent by the $RRU_0(2)$ and the $RRU_1(1)$ on frequencies adjusted by using $f_d(i)$ have a same frequency offset X when arriving at the terminal $A_i$, and X is not 0, when the $RRU_0(2)$ and the $RRU_1(1)$ send the downlink signals on the adjusted frequencies, a frequency deviation may exist in the downlink signals received by the terminal Ai. The terminal $A_i$ may determine frequency offsets of the received downlink signals according to the prior art, and adjust a crystal oscillator of the terminal $A_i$ according to the determined frequency offsets, thereby maintaining good downlink signal demodulation performance.

As shown in FIG. 7, another embodiment of the present invention provides a communications method. By using the scenario shown in FIG. 3 as an example, the following describes steps that the communications method may include. It may be understood that, the communications method also applies to the scenarios in FIG. 4 and FIG. 5, and may be executed by the foregoing communications device 60 (for example, a base station), that is, cross-reference may be made between the communications method and details provided in the foregoing embodiment. For example, a BBU 601 may be configured to perform an action of a BBU in the following steps, and an $RRU_0(2)$ and an $RRU_1(1)$ are separately configured to perform actions of an $RRU_0$ and an $RRU_1$ in the following steps.

S710: ABBU determines frequency offsets of uplink signals received by an $RRU_0$ and an $RRU_1$ from terminals. The BBU is configured to control a first logical cell, and the first logical cell includes a physical cell covered by the $RRU_0$ and a physical cell covered by the $RRU_1$; and the physical cell covered by the $RRU_0$ and the physical cell covered by the $RRU_1$ partially overlap in a first area. The foregoing terminals refer to multiple terminals that move from the $RRU_1$ to the $RRU_0$ in the foregoing overlapping area.

In this embodiment, the $RRU_0$ and the $RRU_1$ separately receive uplink signals from the $i^{th}$ terminal ($A_i$), and the BBU may perform a measurement on the foregoing received uplink signals, so as to determine a frequency offset $\Delta f_0(i)$ of an uplink signal received by the $RRU_0$ from the terminal $A_i$ and a frequency offset $\Delta f_1(i)$ of an uplink signal received by the $RRU_1$ from the terminal $A_i$.

S720: The BBU determines offset pre-correction amounts (or referred to as Doppler frequency offset estimated values) for the terminals.

Optionally, it is assumed that the $RRU_0$ and the $RRU_1$ separately adjust, according to a first variable, frequencies on which the $RRU_0$ and the $RRU_1$ send the downlink signals, and then there is a value $Y_i$ of the first variable, which makes the downlink signals separately sent by the $RRU_0$ and the $RRU_1$ on the adjusted frequencies have a same frequency offset when arriving at the terminal $A_i$. Then, the value $Y_i$ of the first variable is an offset pre-correction amount for the terminal $A_i$, and may be indicated by $f_d(i)$.

In this embodiment, the BBU determines the offset pre-correction amount fd(i) of the terminal $A_i$ by using the frequency offset of the uplink signals received by the $RRU_0$ and the $RRU_1$ from the terminal $A_i$ as a parameter. For example, the BBU determines a value of a variable R according to a type of a system in which the BBU is located, and then determines fd(i) by using the foregoing formula (6.2).

In this embodiment, it is assumed that a frequency of the $RRU_0$ is adjusted from fo to a difference between fo and $f_d(i)$, and a frequency of the $RRU_1$ is adjusted from $f_1$ to a sum of $f_1$ and $f_d(i)$, and then the frequency offsets of the downlink signals sent by the $RRU_0$ and the $RRU_1$ after the frequencies are adjusted are the same when the downlink signals arrive at the terminal $A_i$. $f_0$ and $f_1$ are respectively central frequencies on which the $RRU_0$ and the $RRU_1$ work. It may be understood that, $f_0$ and $f_1$ are the same.

If a distance between the terminal $A_i$ and the $RRU_0$ is the same as a distance between the terminal $A_i$ and the $RRU_1$, that is, the terminal $A_i$ is located at a middle point between the $RRU_0$ and the $RRU_1$, the frequency offsets of the foregoing uplink signals are all 0 when the uplink signals arrive at the terminal $A_i$.

It should be noted that, using the foregoing formula (6.2) is an example of a method for the BBU to determine the offset pre-correction amount for each terminal. However, the present invention is not limited thereto. By using another method, for example, a variant of the foregoing formula (6.2), the BBU may determine which value of the first variable can make the downlink signals separately sent by the $RRU_0$ and the $RRU_1$ on the adjusted frequencies have a same frequency offset (which is not limited to 0) when arriving at the terminal $A_i$. Therefore, the value of the first variable is used as the offset pre-correction amount for the terminal $A_i$.

S730: The BBU determines whether a distance $L_0$ between every terminal and the $RRU_0$ and a distance $L_1$ between every terminal and the $RRU_1$ are both greater than d; and if yes, perform S740.

This step is an optional step. That is, the BBU may also perform step S740 after step S720, without needing to perform step S730.

In this embodiment, it is assumed that q% and $D_{min}$ are preset in the BBU. A tolerance for a difference between frequency offsets of different terminals is q%, a straight line formed between the $RRU_0(2)$ and the $RRU_1(1)$ is parallel to a movement line of the terminal $A_i$, and a distance between the two lines is $D_{min}$. Then, d may be indicated by the foregoing formula (6.4).

It should be noted that, in this embodiment, a time at which q is preset is not limited, as long as it is ensured that valid q exists when a base station (for example, the foregoing BBU) performs S730. It may be understood that, a smaller value of q indicates a larger d. That is, a smaller tolerance for the differences between the frequency offsets indicates a smaller probability for the BBU to perform S740, and a better effect of executing the method provided in this embodiment. That is, more terminals are ensured to have better downlink signal demodulation performance.

During an actual deployment, a distance between two adjacent RRUs is large, for example, 1 kilometer, and therefore, vertical heights of the RRUs on poles may be ignored, that is: an RRU and a pole on which the RRU is located are considered as a same point, and the distance $L_0$ between a terminal and the $RRU_0$ may be considered as a distance between the terminal and a perpendicular that is from the $RRU_0$ to a moving direction of the terminal. As shown in FIG. 7, a distance between the $RRU_0$ and the $RRU_1$ is $D_s$, and a distance from a straight line formed between the $RRU_0$ and the $RRU_1$ to a line along which the terminal moves is $D_{min}$. Then, as shown in FIG. 7, frequency offsets of terminals in an area of $D_s$-2*d are considered to be the same, and therefore, the $RRU_0$ and the $RRU_1$ may adjust, by using a parameter with universality, frequencies on which downlink signals are sent, so that downlink signals sent by different RRUs (that is, the $RRU_0$ and the $RRU_1$) have a same frequency offset when arriving at a same terminal.

In a variant of this embodiment, the BBU probably does not learn $L_0$ and $L_1$, and probably further does not learn d; and then the BBU may determine whether the distance $L_0$ between every terminal and the $RRU_0$ and the distance $L_1$ between the terminal $A_i$ and $RRU_1$ are both greater than d according to whether the offset pre-correction amounts of the terminals meet a condition (1) and a condition (2).

Condition (1): an offset pre-correction amount of every terminal is a positive number or a negative number.

Condition (2): an absolute value of a difference between offset pre-correction amounts of every two terminals is less than or equal to $|q\%*f_{d-max}|$, where $f_{d-max}$ is a maximum frequency offset of a downlink signal of the $RRU_0$ or the $RRU_1$. It may be understood that, generally speaking, maximum frequency offsets of the downlink signals of the $RRU_0$ and the $RRU_1$ are the same

The foregoing condition (1) and condition (2) separately include two options. When the BBU determines that either option in every condition is met, it is equivalent to that: it is determined that the distance $L_0$ between every terminal and the $RRU_0$ and the distance $L_1$ between the terminal $A_i$ and $RRU_1$ are both greater than d.

Optionally, the BBU may determine whether the foregoing condition (1) and condition (2) are met by using multiple calculation processes in which the offset pre-correction amount of every terminal is used as a parameter. Using the condition (2) as an example: the BBU may calculate an absolute value of a difference between offset pre-correction amounts of every two terminals, and compare the absolute value with $|q\%*f_{d-max}|$; or the BBU may first select a maximum value and a minimum value from the offset pre-correction amounts of the terminals, then calculate an absolute value between the maximum value and the minimum value, and compare the absolute value with $|q\%*f_{d-max}|$. It may be understood that, in the latter calculation process, if the absolute value of the difference between the maximum value and the minimum value is less than or equal to $|q\%*f_{d-max}|$, it indicates that the absolute value of the difference between the offset pre-correction amounts of every two terminals is less than or equal to $|q\%*f_{d-max}|$, that is, the condition (2) is met.

S740: The BBU determines a first offset correction amount $f_{d\_dl\_0}$ and a second offset correction amount $f_{d\_dl\_1}$ according to the offset pre-correction amounts of the terminals.

The BBU may determine $f_{d\_dl}$ according to the offset pre-correction amounts of the terminals, and then determine $f_{d\_dl\_0}$ and $f_{d\_dl\_1}$ according to $f_{d\_dl}$.

Using the foregoing formula (6.1) as an example, a(i) is a weight value, and different values of a(i) may cause different values of $f_{d\_dl}$.

For example, referring to a formula (7.1), offset pre-correction amounts of $f_{d\_dl}$ and the terminal Ai are the same:

$$a(i)=1, \ a(n)=0; \ n!=i, \ 1 \leq i \leq n \quad \text{formula (7.1)}$$

For another example, referring to a formula (7.2), that is, a(i) forms an equivalent array, $f_{d\_dl}$ is a linear average of the offset pre-correction amounts of the n terminals:

$$a(1)=a(2)=\ldots=a(n)=1/n \quad \text{formula (7.2)}$$

If the foregoing formula (6.3) is used in this embodiment, parameters $RSRP_0(i)$ and $RSRP_1(i)$ may be determined before the BBU performs S740. For example, S710 further includes that: the BBU determines RSRP of the uplink signals received by the $RRU_0$ and the $RRU_1$ from every terminal.

Optionally, when determining $f_{d\_dl\_0}$ and $f_{d\_dl\_1}$ according to $f_{d\_dl}$, the BBU may select any $f_{d\_dl\_0}$ and $f_{d\_dl\_1}$

that meet the foregoing conditions (1) to (3) or an alternative condition thereof, or may select $f_{d\_dl\_0}$ and $f_{d\_dl\_1}$ that meet the foregoing conditions (4) to (6) or an alternative condition thereof.

S750: The $RRU_0$ and the $RRU_1$ separately send downlink signals by using frequencies adjusted according to $f_{d\_dl\_0}$ and $f_{d\_dl\_1}$.

For example, after the BBU selects $f_{d\_dl\_0}$ and $f_{d\_dl\_1}$ according to the foregoing conditions (1) to (3) or an alternative condition thereof, a frequency on which the $RRU_0$ sends a downlink signal may be: $f_0 - f_{d\_dl\_0}$, and a frequency on which the $RRU_1$ sends a downlink signal may be: $f_1 + f_{d\_dl\_1}$.

For another example, after the BBU selects $f_{d\_dl\_0}$ and $f_{d\_dl\_1}$ according to the foregoing conditions (4) to (6) or an alternative condition thereof, a frequency on which the $RRU_0$ sends a downlink signal may be: $fo + f_{d\_dl\_0}$, and a frequency on which the $RRU_1$ sends a downlink signal may be: $f_1 + f_{d\_dl\_1}$.

It may be understood that, in this embodiment, after some processing performed by the BBU or the RRU, the frequencies on which $RRU_0$ and the $RRU_1$ send the downlink signals may be the frequencies adjusted according to $f_{d\_dl\_0}$ and $f_{d\_dl\_1}$. The following provides description by using examples.

For example, using the $RRU_0$ as an example, processing performed by the BBU in a time domain includes: adding a phase $\psi$ to a phase of a sampling point, where $\psi = 2 *\pi* f_{d\_dl\_0} *\Delta T$, and $\Delta T$ indicates a time difference between adjacent sampling points. By using this method for maintaining a phase difference between two adjacent sampling points, the frequency on which the $RRU_0$ sends a downlink signal can be adjusted according to $f_{d\_dl\_0}$.

For another example, using the $RRU_1$ as an example, when performing convolution for a downlink signal in a frequency domain, the BBU adopts a coefficient related to $f_{d\_dl\_1}$, so that the frequency on which the $RRU_1$ sends a downlink signal can be adjusted according to $f_{d\_dl\_1}$.

For another example, the frequency $fo$ is decreased by $f_{d\_dl\_0}$ for the $RRU_0$, and the frequency $f_1$ is increased by $f_{d\_dl\_1}$ for the $RRU_0$, so that the frequencies on which the $RRU_0$ and the $RRU_1$ send the downlink signals can be separately adjusted according to $f_{d\_dl\_0}$ and $f_{d\_dl\_1}$.

In this embodiment, the terminals receive the downlink signals sent by the $RRU_0$ and the $RRU_1$ in S750. For the terminal $A_i$, even if there is still a difference between frequency offsets of the downlink signals separately sent by the $RRU_0$ and the $RRU_1$ on the adjusted frequencies when the downlink signals arrive at the terminal $A_i$, the terminal $A_i$ can prevent to some extent deteriorated terminal demodulation performance by adjusting the crystal oscillator of the terminal $A_i$. Further, if the frequency offsets of the downlink signals separately sent by the $RRU_0$ and the $RRU_1$ on the adjusted frequencies when the downlink signals arrive at the terminal $A_i$ are both 0, it may be considered that a frequency deviation does not exist in the downlink signals received by the terminal $A_i$ from the $RRU_0$ and the $RRU_1$. Therefore, the terminal $A_i$ can also maintain good downlink signal demodulation performance, without needing to adjust the crystal oscillator of the terminal $A_i$. If the frequency offsets of the downlink signals separately sent by the $RRU_0$ and the $RRU_1$ on the adjusted frequencies when the downlink signals arrive at the terminal $A_i$ are the same, but not 0, a frequency deviation may exist in both downlink signals of the $RRU_0$ and the $RRU_1$ received by the terminal $A_i$. Therefore, the terminal $A_i$ may determine the frequency offsets of the received downlink signals according to the prior art, and adjust the crystal oscillator of the terminal $A_i$ according to the determined frequency offsets, thereby maintaining good downlink signal demodulation performance.

In this embodiment of the present invention, description is made by using a scenario in which the n terminals are located in the overlapping coverage area (for example, the locations of the trains in FIG. 3, FIG. 4, and FIG. 5) of the $RRU_0$ and the $RRU_1$ that are controlled by the BBU. In fact, as the train runs, the terminals move along the track line, and leave the overlapping coverage area of the $RRU_0$ and the $RRU_1$ at a certain time point, and enter an overlapping coverage area of other RRUs that are controlled by the BBU. Therefore, when learning that the terminals enter an overlapping coverage area of some RRUs, a BBU in a base station may execute again the method provided in this embodiment. Optionally, the BBU may determine, by measuring an uplink signal sent by the terminal, a specific area that the terminal enters. Details are not provided again herein.

Optionally, the method provided in the foregoing embodiment may also be periodically executed by the base station. According to one aspect, a shorter cycle T indicates that the base station executes the foregoing method more frequently, that is, T with a smaller value may make the base station determine a correct frequency offset faster, thereby better ensuring performance of a fast moving terminal in downlink signal demodulation. According to another aspect, a longer cycle may indicate a larger time interval in which the base station executes the foregoing method, that is, T with a larger value makes the base station meet performance of a terminal moving at a general speed in downlink signal demodulation, which further facilitates reduction of internal processing complexity of the base station, and reduces power consumption of the base station.

Optionally, the cycle T adopted by the base station when executing the foregoing method is preset, or is calculated instantly when needing to execute the foregoing manner. For example, when many uncertain elements exist in an application scenario of the foregoing method, the base station may determine different cycles by using different calculation manners, and in a case in which the foregoing application scenario tends to stabilize, an empirical value of certain T is considered as preset T, that is, the base station continuously uses the T, and do not calculate T again in a period of time. Certainly, preset T may also already be stored in a storage area of the base station before the base station leaves the factory or is powered on. Optionally, the base station may start to execute the foregoing method when being powered on, or may also start to execute the foregoing method when the $RRU_0$ and the $RRU_1$ separately receive the uplink signal from the terminal $A_i$.

By using examples, the following makes description for a condition or a rule that T may meet.

Example 1: it is assumed that a cycle in which the terminal reports an RSRP measurement amount to the base station is t, T may be equal to t, or may be greater than t. That is, T preset by the base station is any value that is greater than or equal to t, or the base station calculates a value of T by using t as a parameter, to make T greater than or equal to t. The foregoing calculation may use multiple formulas. The following is an example of a simple formula: $T = m * t$, where m is greater than or equal to 1.

Example 2: the cycle T may further be less than or equal to a ratio of a distance $D_s$ between two adjacent RRUs (for example, the $RRU_0$ and the $RRU_1$) to a train speed v. That is, $T < D_s / v$ or $T = D_s / v$.

In addition, the foregoing example 1 and example 2 may be combined. For example, $m * t \leq T \leq D_s / v$. It is assumed that, t is 5 milliseconds (ms), $D_s$ is 1000 meters, and v is 300 kilometers/hour, and then a value of T may be 200 ms.

It may be understood that, the cycle T in which the base station periodically executes the foregoing method may be applied to different steps, for example, the base station performs S720 and/or S740 according to T.

Another embodiment of the present invention further provides a communications system, where the system includes the communications device 60 provided in the foregoing embodiment, and may further include multiple terminals that communicate with the communications device 60.

The communications method, device, and system that are provided in the foregoing embodiments may be applied to a communications system using a cell-combined networking mode, which can improve downlink signal demodulation performance of a moving terminal.

It should be noted that, a function involved in the communications method, and the communications device and system that are provided in the embodiments of the present invention may be stored in a computer readable storage medium if being implemented in a form of a software functional unit and being sold or used as an independent product. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A distributed system comprising a baseband unit, BBU, (601) and two remote radio units: an $RRU_0$ and an $RRU_1$, wherein the BBU is configured to control a first logical cell, and the first logical cell comprises a physical cell covered by the $RRU_0$ and a physical cell covered by the $RRU_1$; and the physical cell covered by the $RRU_0$ and the physical cell covered by the $RRU_1$ overlap in a first area, wherein:

   • the $RRU_0$ and the $RRU_1$ are configured to separately send first downlink signals on a frequency $f_0$ to N terminals,
   • the $RRU_0$ is configured to send second downlink signals on a first frequency to the N terminals and the $RRU_1$ is configured to send the second downlink signals on a second frequency to the N terminals, wherein the first frequency is a difference between fo and a first offset correction amount $f_{d\_dl\_0}$, the second frequency is a sum of fo and a second offset correction amount $f_{d\_dl\_1}$, wherein at least one of $f_{d\_dl\_0}$ and $f_{d\_dl\_1}$ is not o,
   wherein $f_{d\_dl\_0}$ and $f_{d\_dl\_1}$ respectively meet the following conditions:

$$|f_{d\_dl\_0}| < |2^*f_{d\_dl}|;$$

and

$$|f_{d\_dl\_1}| < |2^*f_{d\_dl}|,$$

wherein the parameters $f_{d\_dl}$, $f_{d\_dl\_0}$, and $f_{d\_dl\_1}$ are all non-positive numbers, or, $f_{d\_dl}$, $f_{d\_dl\_0}$, and $f_{d\_dl\_1}$ are all non-negative numbers,

• the $RRU_0$ and the $RRU_1$ are further configured to: before sending the second downlink signals, separately receive uplink signals sent by the N terminals that move from the $RRU_1$ to the $RRU_0$, wherein the N terminals are located in the first area, an $i^{th}$ terminal is indicated by a terminal $A_i$, and i is any value from 1 to N,

• the BBU is further configured to determine $f_d(i)$ indicating a Doppler frequency offset estimated value based on the uplink signals and is configured to determine $f_{d\_dl}$, wherein

$$f_{d\_dl} = \sum_{i=1}^{n} a(i) * f_d(i);$$

$$\sum_{i=1}^{n} a(i) = 1, \text{ and } 0 \le a(i) \le 1;$$

• the BBU is further configured to determine reference signal received power, RSRP, of the uplink signals that are received by the $RRU_0$ and the $RRU_1$, and determine a(i) according to the following formulas:

$$RSRP\_i = RSRP_0(i) + RSRP_1(i);$$

$$RSRP\_sum = \sum RSRP\_i;$$

and

$$a(i) = RSRP\_i \,/\, RSRP\_sum,$$

wherein $RSRP_0(i)$ indicates RSRP of an uplink signal, among the uplink signals, received by the $RRU_0$ from the terminal $A_i$ among the N terminals, and $RSRP_1(i)$ indicates RSRP of an uplink signal, among the uplink signals, received by the $RRU_1$ from the terminal $A_i$.

2. The distributed system according to claim 1, wherein the BBU is further configured to: when a first condition and a second condition are met, determine that the N terminals are located in the first area;

the first condition comprises that: a Doppler frequency offset estimated value of every terminal in the N terminals is a positive number or a negative number; and
the second condition comprises that: an absolute value of a difference between Doppler frequency offset estimated values of every two terminals in the N terminals is less than or equal to $|q\%^*f_{d-max}|$, wherein fd-max is a maximum frequency offset of a downlink signal from the $RRU_0$ or the $RRU_1$.

3. A method performed by a distributed system comprising a baseband unit, BBU, (601) and two remote radio units: an $RRU_0$ and an $RRU_1$, wherein the BBU is configured to control a first logical cell, and the first logical cell comprises a physical cell covered by the $RRU_0$ and a physical cell covered by the $RRU_1$; and the physical cell covered by the $RRU_0$ and the physical cell covered by the $RRU_1$ overlap in a first area, the method comprising:

• sending, by the $RRU_0$, first downlink signals on a frequency fo to N terminals and sending, by the $RRU_1$, the

first downlink signals on the frequency fo to the N terminals;
• separately receiving, by the $RRU_0$ and the $RRU_1$, uplink signals sent by the N terminals that move from the $RRU_1$ to the $RRU_0$, wherein the N terminals are located in the first area, an $i^{th}$ terminal is indicated by a terminal $A_i$, and i is any value from 1 to N,
• determining, by the BBU, $f_d(i)$ indicating a Doppler frequency offset estimated value based on the uplink signals and determining, by the BBU, $f_{d\_dl}$, wherein

$$f_{d\_dl} = \sum_{i=1}^{n} a(i) * f_d(i);$$

$$\sum_{i=1}^{n} a(i) = 1, \text{ and } 0 \leq a(i) \leq 1;$$

• determining, by the BBU, reference signal received power, RSRP, of the uplink signals that are received by the $RRU_0$ and the $RRU_1$, and determining, by the BBU, a(i) according to the following formulas:

$$RSRP\_i = RSRP_0(i) + RSRP_1(i);$$

$$RSRP\_sum = \sum RSRP\_i;$$

and

$$a(i) = RSRP\_i / RSRP\_sum,$$

wherein $RSRP_0(i)$ indicates RSRP of an uplink signal, among the uplink signals, received by the $RRU_0$ from the terminal $A_i$ among the N terminals, and $RSRP_1(i)$ indicates RSRP of an uplink signal, among the uplink signals, received by the $RRU_1$ from the terminal $A_i$,
• sending, by the $RRU_0$, second downlink signals on a first frequency to the N terminals and sending, by the $RRU_1$, the second downlink signals on a second frequency to the N terminals, wherein the first frequency is a difference between $f_0$ and a first offset correction amount $f_{d\_dl\_0}$, the second frequency is a sum of $f_0$ and a second offset correction amount $f_{d\_dl\_1}$, wherein at least one of $f_{d\_dl\_0}$ and $f_{d\_dl\_1}$ is not 0,
wherein $f_{d\_dl\_0}$ and $f_{d\_dl\_1}$ respectively meet the following conditions:

$$\left| f_{d\_dl\_0} \right| < \left| 2*f_{d\_dl} \right|;$$

and

$$\left| f_{d\_dl\_1} \right| < \left| 2*f_{d\_dl} \right|,$$

wherein the parameters $f_{d\_dl}$, $f_{d\_dl\_0}$, and $f_{d\_dl\_1}$ are all non-positive numbers, or, $f_{d\_dl}$, $f_{d\_dl\_0}$, and $f_{d\_dl\_1}$ are all non-negative numbers.

4. The method according to claim 3, wherein the method further comprises:

when a first condition and a second condition are met, determining, by the BBU, that the N terminals are located in the first area, wherein
the first condition comprises that: a Doppler frequency offset estimated value of every terminal in the N terminals is a positive number or a negative number; and
the second condition comprises that: an absolute value of a difference between Doppler frequency offset estimated values of every two terminals in the N terminals is less than or equal to $|q\%*f_{d-max}|$, wherein $f_{d-max}$ is a maximum frequency offset of a downlink signal from the $RRU_0$ or the $RRU_1$.

**Patentansprüche**

1. Verteiltes System, umfassend eine Basisbandeinheit, BBU, (601) und zwei Fernfunkeinheiten (remote radio units - RRU): eine $RRU_0$ und eine $RRU_1$, wobei die BBU konfiguriert ist, um eine erste logische Zelle zu steuern, und die erste logische Zelle eine physikalische Zelle, die von der $RRU_0$ abgedeckt ist, und eine physikalische Zelle, die von der $RRU_1$ abgedeckt ist, umfasst; und sich die physikalische Zelle, die von der $RRU_0$ abgedeckt ist, und die physikalische Zelle, die von der $RRU_1$ abgedeckt ist, in einem ersten Bereich überlappen, wobei:

• die $RRU_0$ und die $RRU_1$ konfiguriert sind, um getrennt erste Downlink-Signale auf einer Frequenz $f_0$ zu N Endgeräten zu senden,
• die $RRU_0$ konfiguriert ist, um zweite Downlink-Signale auf einer ersten Frequenz zu den N Endgeräten zu senden, und die $RRU_1$ konfiguriert ist, um die zweiten Downlink-Signale auf einer zweiten Frequenz zu den N Endgeräten zu senden, wobei die erste Frequenz eine Differenz zwischen $f_0$ und einem ersten Versatz-Korrekturbetrag $f_{d\_dl\_0}$ ist und die zweite Frequenz eine Summe von $f_0$ und einem zweiten Versatz-Korrekturbetrag $f_{d\_dl\_1}$ ist, wobei mindestens eines von $f_{d\_dl\_0}$ und $f_{d\_dl\_1}$ nicht 0 ist,
wobei $f_{d\_dl\_0}$ und $f_{d\_dl\_1}$ jeweils die folgenden Bedingungen erfüllen:

$$|f_{d\_dl\_o}| < |2*f_{d\_dl}|;$$

und

$$|f_{d\_dl\_1}| < |2*f_{d\_dl}|,$$

wobei die Parameter $f_{d\_dl}$, $f_{d\_dl\_0}$ und $f_{d\_dl\_1}$ jeweils nicht positive Zahlen sind oder $f_{d\_dl}$, $f_{d\_dl\_0}$ und $f_{d\_dl\_1}$ jeweils nicht negative Zahlen sind,
• die $RRU_0$ und die $RRU_1$ ferner für Folgendes konfiguriert sind: vor dem Senden der zweiten Downlink-Signale getrenntes Empfangen von Uplink-Signalen, die von den N Endgeräten gesendet werden und die sich von der $RRU_1$ zur $RRU_0$ bewegen, wobei sich die N Endgeräte in dem ersten Bereich befinden, ein i. Endgerät von einem Endgerät $A_i$ angezeigt wird und i ein beliebiger Wert von 1 bis N ist,
• die BBU ferner konfiguriert ist, um $f_d(i)$ zu bestimmen, das einen geschätzten Wert eines Doppler-Frequenzversatzes auf Grundlage der Uplink-Signale anzeigt, und konfiguriert ist, um $f_{d\_dl}$ zu bestimmen, wobei

$$f_{d\_dl} = \sum_{i=1}^{n} a(i) * f_d(i);$$

$$\sum_{i=1}^{n} a(i) = 1, \text{ and } o \leq a(i) \leq 1;$$

• die BBU ferner konfiguriert ist, um die Empfangsfeldstärke des Referenzsignals (reference signal received power), RSRP, der Uplink-Signale, die von der $RRU_0$ und der $RRU_1$ empfangen werden, zu bestimmen und a(i) gemäß den folgenden Formeln zu bestimmen:

$$RSRP\_i = RSRP_0(i) + RSRP_1(i);$$

$$RSRP\_sum = \sum RSRP\_i;$$

und

$$a(i) = RSRP\_i \,/\, RSRP\_sum,$$

wobei $RSRP_0(i)$ die RSRP eines Uplink-Signals aus den Uplink-Signalen, die durch die $RRU_0$ von dem Endgerät $A_i$ aus den N Endgeräten empfangen wurden, anzeigt und $RSRP_1(i)$ die RSRP eines Uplink-Signals aus den Uplink-Signalen, die durch die $RRU_1$ von dem Endgerät $A_i$ empfangen wurden, anzeigt.

2. Verteiltes System nach Anspruch 1, wobei die BBU ferner für Folgendes konfiguriert ist: wenn eine erste Bedingung und eine zweite Bedingung erfüllt sind, Bestimmen, dass sich die N Endgeräte in dem ersten Bereich befinden;

wobei die erste Bedingung umfasst, dass: ein geschätzter Wert des Doppler-Frequenzversatzes jedes Endgerätes von den N Endgeräten eine positive Zahl oder eine negative Zahl ist; und
wobei die zweite Bedingung umfasst, dass: ein absoluter Wert einer Differenz zwischen geschätzten Werten des Doppler-Frequenzversatzes aller zwei Endgeräte von den N Endgeräten kleiner als oder gleich $|q\%*f_{d\text{-}max}|$ ist, wobei $f_{d\text{-}max}$ ein maximaler Frequenzversatz eines Downlink-Signals von der $RRU_0$ oder der $RRU_1$ ist.

3. Verfahren, das von einem verteilten System, umfassend eine Basisbandeinheit, BBU, (601) und zwei Fernfunkeinheiten: eine $RRU_0$ und eine $RRU_1$, durchgeführt wird, wobei die BBU konfiguriert ist, um eine erste logische Zelle zu steuern, und die erste logische Zelle eine physikalische Zelle, die von der $RRU_0$ abgedeckt wird, und eine physikalische Zelle, die von der $RRU_1$ abgedeckt wird, umfasst; und sich die physikalische Zelle, die von der $RRU_0$ abgedeckt wird, und die physikalische Zelle, die von der $RRU_1$ abgedeckt wird, in einem ersten Bereich überlappen, wobei das Verfahren Folgendes umfasst:

• Senden von ersten Downlink-Signalen auf einer Frequenz $f_0$ zu N Endgeräten durch die $RRU_0$ und Senden der ersten Downlink-Signale auf der Frequenz $f_0$ zu den N Endgeräten durch die $RRU_1$;
• getrenntes Empfangen von Uplink-Signalen, die von den N Endgeräten gesendet wurden und die sich von der $RRU_1$ zur $RRU_0$ bewegen, durch die $RRU_0$ und die $RRU_1$, wobei sich die N Endgeräte in dem ersten Bereich befinden, ein i. Endgerät von einem Endgerät $A_i$ angezeigt wird und i ein beliebiger Wert von 1 bis N ist,
• Bestimmen von $f_d(i)$, das einen geschätzten Wert des Doppler-Frequenzversatzes auf Grundlage der Uplink-Signale anzeigt, durch die BBU, und Bestimmen von $f_{d\_dl}$ durch die BBU, wobei

$$f_{d\_dl} = \sum_{i=1}^{n} a(i) * f_d(i);$$

$$\sum_{i=1}^{n} a(i) = 1 \quad \text{und} \quad 0 \le a(i) \le 1;$$

• Bestimmen der Empfangsfeldstärke des Referenzsignals (reference signal received power), RSRP, der Uplink-Signale, die von der $RRU_0$ und der $RRU_1$ empfangen werden, durch die BBU, und Bestimmen von a(i) gemäß den folgenden Formeln durch die BBU:

$$RSRP\_i = RSRP_0(i) + RSRP_1(i);$$

$$RSRP\_sum = \sum RSRP\_i;$$

und

$$a(i) = RSRP\_i \,/\, RSRP\_sum,$$

wobei $RSRP_0(i)$ die RSRP eines Uplink-Signals aus den Uplink-Signalen anzeigt, die durch die $RRU_0$ von dem Endgerät $A_i$ aus den N Endgeräten empfangen wurden, und $RSRP_1(i)$ die RSRP eines Uplink-Signals aus den Uplink-Signalen anzeigt, die durch die $RRU_1$ von dem Endgerät $A_i$ empfangen wurden,

• Senden von zweiten Downlink-Signalen auf einer ersten Frequenz zu den N Endgeräten durch die $RRU_0$ und Senden der zweiten Downlink-Signale auf einer zweiten Frequenz zu den N Endgeräten durch die $RRU_1$, wobei die erste Frequenz eine Differenz zwischen $f_0$ und einem ersten Versatz-Korrekturbetrag $f_{d\_dl\_0}$ ist und die zweite Frequenz eine Summe von fo und einem zweiten Versatz-Korrekturbetrag $f_{d\_dl\_1}$ ist, wobei mindestens eines von $f_{d\_dl\_0}$ und $f_{d\_dl\_1}$ nicht 0 ist,

wobei $f_{d\_dl\_0}$ und $f_{d\_dl\_1}$ jeweils die folgenden Bedingungen erfüllen:

$$\left| f_{d\_dl\_o} \right| < \left| 2{*}f_{d\_dl} \right|;$$

und

$$\left| f_{d\_dl\_1} \right| < \left| 2{*}f_{d\_dl} \right|,$$

wobei die Parameter $f_{d\_dl}$, $f_{d\_dl\_0}$ und $f_{d\_dl\_1}$ jeweils nicht positive Zahlen sind oder $f_{d\_dl}$, $f_{d\_dl\_0}$ und $f_{d\_dl\_1}$ jeweils nicht negative Zahlen sind.

**4.** Verfahren nach Anspruch 3, wobei das Verfahren ferner Folgendes umfasst:

wenn eine erste Bedingung und eine zweite Bedingung erfüllt sind, Bestimmen, durch die BBU, dass sich die N Endgeräte in dem ersten Bereich befinden; wobei die erste Bedingung umfasst, dass: ein geschätzter Wert des Doppler-Frequenzversatzes jedes Endgeräts von den N Endgeräten eine positive Zahl oder eine negative Zahl ist; und

die zweite Bedingung umfasst, dass: ein absoluter Wert einer Differenz zwischen geschätzten Werten des Doppler-Frequenzversatzes aller zwei Endgeräte von den N Endgeräten kleiner als oder gleich $|q\%{*}f_{d\text{-}max}|$ ist, wobei $f_{d\text{-}max}$ ein maximaler Frequenzversatz eines Downlink-Signals von der $RRU_0$ oder der $RRU_1$ ist.

## Revendications

**1.** Système distribué comprenant une unité de bande de base, BBU, (601) et deux unités radio distantes : une $RRU_0$ et une $RRU_1$, dans lequel la BBU est configurée pour commander une première cellule logique, et la première cellule logique comprend une cellule physique couverte par la $RRU_0$ et une cellule physique couverte par la $RRU_1$ ; et la cellule physique couverte par la $RRU_0$ et la cellule physique couverte par la $RRU_1$ se chevauchent dans une première zone, dans lequel :

- la $RRU_0$ et la $RRU_1$ sont configurées pour envoyer séparément des premiers signaux de liaison descendante sur une fréquence $f_0$ à N terminaux,
- la $RRU_0$ est configurée pour envoyer des seconds signaux de liaison descendante sur une première fréquence aux N terminaux et la $RRU_1$ est configurée pour envoyer les seconds signaux de liaison descendante sur une seconde fréquence aux N terminaux, dans lequel la première fréquence est une différence entre fo et une première quantité de correction de décalage $f_{d\_dl\_0}$, la seconde fréquence est une somme de fo et d'une seconde quantité de correction de décalage $f_{d\_dl\_1}$, dans lequel au moins l'une parmi $f_{d\_dl\_0}$ et $f_{d\_dl\_1}$ est différente de 0, dans lequel $f_{d\_dl\_0}$ et $f_{d\_dl\_1}$ satisfont respectivement aux conditions suivantes :

$$\left| f_{d\_dl\_0} \right| < \left| 2{*}f_{d\_dl} \right| \ ;$$

et

$$\left| f_{d\_dl\_1} \right| < \left| 2{*}f_{d\_dl} \right|,$$

dans lequel les paramètres $f_{d\_dl}$, $f_{d\_dl\_0}$, et $f_{d\_dl\_1}$ sont tous des nombres non positifs, ou, $f_{d\_dl}$, $f_{d\_dl\_0}$, et $f_{d\_dl\_1}$ sont tous des nombres non négatifs,
- la $RRU_0$ et la $RRU_1$ sont en outre configurées pour : avant l'envoi des seconds signaux de liaison descendante, recevoir séparément des signaux de liaison montante envoyés par les N terminaux qui se déplacent de la RRU$_1$ à la RRU$_0$, dans lequel les N terminaux sont situés dans la première zone, un i$^{ème}$ terminal est indiqué par un terminal A$_i$, et i est une quelconque valeur allant de 1 à N,

- la BBU est en outre configurée pour déterminer f$_d$(i) représentant une valeur estimée de décalage de fréquence Doppler sur la base des signaux de liaison montante et est configurée pour déterminer f$_{d\_dl}$, dans lequel

$$f_{d\_dl} = \sum_{i=1}^{n} a(i) * f_d(i) \, ;$$

$$\sum_{i=1}^{n} a(i) = 1 , \text{ et } 0 \leq a(i) \leq 1 \, ;$$

- la BBU est en outre configurée pour déterminer une puissance reçue de signal de référence, RSRP, des signaux de liaison montante qui sont reçus par la RRU$_0$ et la RRU$_1$, et déterminer a(i) en fonction des formules suivantes :

$$\mathrm{RSRP\_i \; = \; RSRP_0(i) \; + \; RSRP_1(i) \; ;}$$

$$\mathrm{RSRP\_somme \; = \; \Sigma RSRP\_i \; ;}$$

et

$$\mathrm{a(i) \; = \; RSRP\_i \; / \; RSRP\_somme,}$$

dans lequel RSRP$_0$(i) représente une RSRP d'un signal de liaison montante, parmi les signaux de liaison montante, reçu par la RRU$_0$ en provenance du terminal A$_i$ parmi les N terminaux, et RSRP$_1$(i) représente une RSRP d'un signal de liaison montante, parmi les signaux de liaison montante, reçu par la RRU$_1$ en provenance du terminal A$_i$.

2. Système distribué selon la revendication 1, dans lequel la BBU est en outre configurée pour : lorsqu'une première condition et une seconde condition sont satisfaites, déterminer que les N terminaux sont situés dans la première zone ;

la première condition comprend le fait que : une valeur estimée de décalage de fréquence Doppler de chaque terminal dans les N terminaux est un nombre positif ou un nombre négatif ; et

la seconde condition comprend le fait que : une valeur absolue d'une différence entre des valeurs estimées de décalage de fréquence Doppler de chaque paire de terminaux dans les N terminaux est inférieure ou égale à |q%*f$_{d-max}$|, dans lequel f$_{d-max}$ est un décalage de fréquence maximal d'un signal de liaison descendante de la RRU$_0$ ou la RRU$_1$.

3. Procédé mis en œuvre par un système distribué comprenant une unité de bande de base, BBU, (601) et deux unités radio distantes : une RRU$_0$ et une RRU$_1$, dans lequel la BBU est configurée pour commander une première cellule logique, et la première cellule logique comprend une cellule physique couverte par la RRU$_0$ et une cellule physique couverte par la RRU$_1$ ; et la cellule physique couverte par la RRU$_0$ et la cellule physique couverte par la RRU$_1$ se chevauchent dans une première zone, le procédé comprenant :

- l'envoi, par la RRU$_0$, de premiers signaux de liaison descendante sur une fréquence f$_0$ à N terminaux et l'envoi, par la RRU$_1$, des premiers signaux de liaison descendante sur la fréquence f$_0$ aux N terminaux ;
- la réception séparée, par la RRU$_0$ et la RRU$_1$, des signaux de liaison montante envoyés par les N terminaux qui se déplacent de la RRU$_1$ à la RRU$_0$, dans lequel les N terminaux sont situés dans la première zone, un i$^{ème}$

terminal est indiqué par un terminal $A_i$, et i est une quelconque valeur allant de 1 à N,
- la détermination, par la BBU, de $f_d(i)$ représentant une valeur estimée de décalage de fréquence Doppler sur la base des signaux de liaison montante et la détermination, par la BBU, de $f_{d\_dl}$, dans lequel

$$f_{d\_dl} = \sum_{i=1}^{n} a(i) * f_d(i) ;$$

$$\sum_{i=1}^{n} a(i)=1, \text{ et } 0 \le a(i) \le 1 ;$$

- la détermination, par la BBU, d'une puissance reçue de signal de référence, RSRP, des signaux de liaison montante qui sont reçus par la $RRU_0$ et la $RRU_1$, et la détermination, par la BBU, de a(i) en fonction des formules suivantes :

$$RSRP\_i = RSRP_0(i) + RSRP_1(i) ;$$

$$RSRP\_somme = \Sigma RSRP\_i ;$$

et

$$a(i) = RSRP\_i / RSRP\_somme,$$

dans lequel $RSRP_0(i)$ représente une RSRP d'un signal de liaison montante, parmi les signaux de liaison montante, reçu par la $RRU_0$ en provenance du terminal $A_i$ parmi les N terminaux, et $RSRP_1(i)$ représente une RSRP d'un signal de liaison montante, parmi les signaux de liaison montante, reçu par la $RRU_1$ en provenance du terminal $A_i$,
- l'envoi, par la $RRU_0$, de seconds signaux de liaison descendante sur une première fréquence aux N terminaux et l'envoi, par la $RRU_1$, des seconds signaux de liaison descendante sur une seconde fréquence aux N terminaux, dans lequel la première fréquence est une différence entre $f_0$ et une première quantité de correction de décalage $f_{d\_dl\_0}$, la seconde fréquence est une somme de $f_0$ et d'une seconde quantité de correction de décalage $f_{d\_dl\_1}$, dans lequel au moins l'une parmi $f_{d\_dl\_0}$ et $f_{d\_dl\_1}$ est différente de 0, dans lequel $f_{d\_dl\_0}$ et $f_{d\_dl\_1}$ satisfont respectivement aux conditions suivantes :

$$\left| f_{d\_dl\_0} \right| < \left| 2 * f_{d\_dl} \right| ;$$

et

$$\left| f_{d\_dl\_1} \right| < \left| 2 * f_{d\_dl} \right|,$$

dans lequel les paramètres $f_{d\_dl}$, $f_{d\_dl\_0}$, et $f_{d\_dl\_1}$ sont tous des nombres non positifs, ou, $f_{d\_dl}$, $f_{d\_dl\_0}$, et $f_{d\_dl\_1}$ sont tous des nombres non négatifs.

4. Procédé selon la revendication 3, dans lequel le procédé comprend en outre :

lorsqu'une première condition et une seconde condition sont satisfaites, la détermination, par la BBU, que les N terminaux sont situés dans la première zone, dans lequel
la première condition comprend le fait que : une valeur estimée de décalage de fréquence Doppler de chaque terminal dans les N terminaux est un nombre positif ou un nombre négatif ; et

la seconde condition comprend le fait que : une valeur absolue d'une différence entre des valeurs estimées de décalage de fréquence Doppler de chaque paire de terminaux dans les N terminaux est inférieure ou égale à $|q\%*f_{d-max}|$, dans lequel $f_{d-max}$ est un décalage de fréquence maximal d'un signal de liaison descendante de la $RRU_0$ ou la $RRU_1$.

$f_c$

Base station

θ

V

Terminal

FIG. 1

$RRU_0$

$\theta_2$

$RRU_1$

$\theta_1$

V

Terminal A

FIG. 2

$RRU_0$

$RRU_1$

$RRU_2$

Pole 0

Pole 1

Pole 2

Terminal
A1

$D_{min}$

$D_{min}$

$D_{min}$

Train

Physical cell 1

Physical cell 0

Physical cell 2

Logical cell

FIG. 3

FIG. 4

FIG. 5

**60**

FIG. 6

Determine frequency offsets of uplink signals received by an $RRU_0$ and an $RRU_1$ from terminals ⎰710

Determine offset pre-correction amounts for the terminals ⎰720

Are a distance $L_0$ between every terminal and the $RRU_0$, and a distance $L_1$ between every terminal and the $RRU_1$ both greater than d? ⎰730

Yes

Determine $f_{d\_dl\_0}$ and $f_{d\_dl\_1}$ according to the offset pre-correction amounts of the terminals ⎰740

Send downlink signals on frequencies adjusted according to $f_{d\_dl\_0}$ and $f_{d\_dl\_1}$ ⎰750

FIG. 7

RRU$_0$                      RRU$_1$

$(D_s - 2*d)$

$D_{min}$     d                   d

$D_s$

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004248519 A

- CN 102045094 A

**Non-patent literature cited in the description**

- **QIU DU et al.** ICI mitigation by Doppler frequency shift estimation and pre-compensation in LTE-R systems. IEEE, 469-474